Europäisches Patentamt

European Patent Office

Office européen des brevets

(11) Veröffentlichungsnummer : **0 180 748**
**B1**

(12) **EUROPÄISCHE PATENTSCHRIFT**

(45) Veröffentlichungstag der Patentschrift :
17.05.89

(21) Anmeldenummer : 85111980.0

(22) Anmeldetag : 21.09.85

(51) Int. Cl.⁴ : **F 16 H    1/32, F 16 H  57/08**

(54) Planetengetriebe.

(30) Priorität : 08.10.84 FR 8415856

(43) Veröffentlichungstag der Anmeldung :
14.05.86 Patentblatt 86/20

(45) Bekanntmachung des Hinweises auf die Patenterteilung : 17.05.89 Patentblatt 89/20

(84) Benannte Vertragsstaaten :
AT BE CH DE GB IT LI LU NL

(56) Entgegenhaltungen :
EP-A- 0 101 349
EP-A- 0 153 604
DE-A- 2 112 631
FR-A-   645 352
FR-A- 1 042 574
FR-A- 2 214 841
FR-A- 2 449 830
GB-A-  927 684
US-A- 3 129 611
US-A- 4 183 267

(73) Patentinhaber : Durand, François
11, rue du bateau
F-06600 Antibes (FR)

(72) Erfinder : Durand, François
11, rue du bateau
F-06600 Antibes (FR)

(74) Vertreter : Ostriga, Harald, Dipl.-Ing. et al
Patentanwälte Dipl.-Ing. Harald Ostriga Dipl.-Ing.
Bernd Sonnet Stresemannstrasse 6-8
D-5600 Wuppertal 2 (DE)

## Beschreibung

Die Erfindung betrifft ein Planetengetriebe mit zwei Doppelexzentern und einem ersten außenverzahnten Ritzel, das mit einer Antriebswelle drehfest ist, zwei außenverzahnten Zahnrädern, die mit dem außenverzahnten Ritzel kämmen ; zwei diametral gegenüberliegende Kurbelzapfen, die jeweils einen Doppelexzenter tragen und die mit den außenverzahnten Zahnrädern drehfest sind, zur Übertragung der Rotation der außenverzahnten Zahnräder auf die Doppelexzenter ; zwei als Planetenräder bezeichnete Zahnräder, die je zwei im Umfangsabstand voneinander angeordnete Axiallöcher zur Aufnahme je eines Lagers tragen, wobei die Planetenräder eine Außenverzahnung aufweisen und wobei eine aufeinander abgestimmte exzentrische Drehbewegung der beiden Doppelexzenter, dessen beiden Exzenter in einem Exzentrizitätswinkel von 180° zueinander stehen, die rotatorische Bewegung der Planetenräder erzeugt ; sowie einen äußeren innenverzahnten Zahnring, der mit der Außenverzahnung der Planetenräder kämmt, wobei der äußere innenverzahnte Zahnring den äußeren Teil des Getriebegehäuses als stationäres oder sich langsam drehendes Element bildet, und die Kurbelzapfen in einem Planetenradträger gelagert sind, der ein sich langsam drehendes oder stationäres Element bildet, und wobei jeder Exzenter mittels eines Lagers gelagert ist, das in einem Axialloch des zugeordneten Planetenrades sitzt.

Das vorbeschriebe bekannte Getriebe ist Gegenstand der GB-A-927 684. Es ist eine Eigenart des bekannten Getriebes, daß die Zahnkräfte, die in der gemeinsamen Ebene der verschiedenen Kurbelzapfenlager wirken, völlig unterschiedliche Reaktionen auf die einzelnen Kurbelzapfenlager hervorrufen. Dieses ist eine Folge des herstellungstoleranzbedingten unterschiedlichen Spiels in den einzelnen Kurbelzapfenlagern. Die unterschiedlichen Reaktionskräfte, die auf die zwei einzelnen Kurbelzapfenlager wirken, besitzen einen sehr großen Einfluß auf die Lastverteilung zwischen den einzelnen Kurbelzapfen. Aufgrund dieser Tatsache kann die gesamte Kraft des Antriebszahnrades nur von einem der beiden Kurbelzapfen übertragen werden. Um diesen schlechten Betriebszustand zu vermeiden, müßten die Herstellungstoleranzen für alle Teile und im besonderen für das Radial-Lagerspiel extrem gering sein, wobei diesbezüglich auf die Offenbarung in der US-PS 3,129,611 verwiesen wird. Eine derart hohe Herstellungspräzision als Voraussetzung für einen problemlosen Betrieb ist unwirtschaftlich.

Ausgehend von dem Getriebe gemäß der GB-A-927 684, liegt der Erfindung die Aufgabe zugrunde, ein Planetenradgetriebe zu schaffen, welches eine gleichmäßige Lastverteilung mit äußerst geringem Herstellungsaufwand gestattet, mit der Möglichkeit, infolge der gleichmäßigen Lastverteilung für eine vorgegebene Kraftübertragung mit den herkömmlichen Verfahren der Lagerhersteller, die Lebensdauer für die verschiedenen Kurbelzapfenlager zu berechnen.

Gelöst wird diese Aufgabe erfindungsgemäß dadurch, daß jeder Doppelexzenter ein Lager mit einem normalen inneren Radial-Spiel auf dem einen Exzenter und ein Lager mit einem erhöhten inneren Radial-Spiel auf dem anderen Exzenter trägt, und wobei eines der beiden Axiallöcher eines jeden Planetenrades ein Lager mit einem normalen inneren Radial-Spiel aufnimmt, während das andere Axialloch jeweils desselben Planetenrades ein Lager mit einem erhöhten inneren Radial-Spiel aufnimmt.

Statt dessen kann auch eine Ausführungsform entsprechend dem Kennzeichenteil des Anspruchs 2 gewählt werden, wonach jeweils anstelle jedes Lagers mit normalem inneren Radial-Spiel ein Lager mit verkleinertem inneren Radial-Spiel und jeweils anstelle jedes Lagers mit erhöhtem inneren Radial-Spiel ein Lager mit normalem inneren Radial-Spiel vorgesehen ist.

Entsprechend der Erfindung kommt im Hinblick auf die beiden Planetenräder ein eigenartiges Zusammenspiel von geringerer und größerer Lagerkraft — und zwar in Überkreuzanordnung — zum Ausdruck, welche den erfindungsgemäßen Vorteil einer gleichmäßigen Last- bzw. Leistungsverteilung mit äußerst geringem Herstellungsaufwand gestattet. Und zwar erzielt die Erfindung eine Halbierung der Antriebskraft und deren hälftige Verteilung auf die beiden Kurbelzapfen und damit eine realistische Bestimmung der Aufteilung der Zahnreaktionskräfte auf die verschiedenen Kurbelzapfenlager.

Um den Einfluß der Herstellungstoleranzen herabzusetzen, werden die folgenden Maßnahmen ergriffen :

a) zur Herstellung der Axiallöcher und der Außenverzahnung der beiden Planetenräder in einem Arbeitsgang werden letztere zusammengeschraubt.

b) Zur gleichzeitigen Herstellung der Außenverzahnung der beiden außenverzahnten Zahnräder, die vom Ritzel auf der Antriebswelle angetrieben werden, sind diese drehfest auf einem gemeinsamen Dorn angeordnet.

c) Zur gleichzeitigen Herstellung der Lagerbohrungen für die Kurbelzapfen und der Stirnzapfenbohrungen der Querriegel in den beiden Flanschen des Planetenradträgers werden die Flansche miteinander verschraubt.

d) Zur gleichzeitigen Herstellung der beiden Doppelexzenterwellen werden diese beiden Doppelexzenterwellen aus einem Stück bearbeitet und nach der Bearbeitung axial voneinander getrennt.

Um die Torsionssteifigkeit des Planetenradträgers zu erhöhen, trägt jeder Querriegel mindestens zwei Rippen und einen Kragen, wobei der Kragen mit dem Planetenradträger an der Abtriebswelle verschraubt ist.

Weitere Vorteile, Einzelheiten und erfindungswesentliche Merkmale ergeben sich aus der nachfolgenden Beschreibung verschiedener Ausführungsbeispiele der Erfindung unter Bezugnahme auf die beigefügten Zeichnungen. Dabei zeigt, bzw. zeigen im einzelnen :

Fig. 1 einen Querschnitt durch eine erste Ausführungsform des erfindungsgemäßen Getriebes, das auf einer Welle mit einer Drehmomentstütze gehalten ist,

Fig. 2 einen Schnitt entlang der Schnittlinie II-II der Fig. 1,

Fig. 3 einen Querschnitt entlang der Schnittlinie III-III der Fig. 2,

Fig. 4 und 5 jeweils einen Teilschnitt entlang der Schnittlinie IV-IV der Fig. 2, wobei die Fig. 5 eine Veränderung gegenüber Fig. 4 darstellt,

Fig. 6 eine der Fig. 1 ähnliche Darstellung, wobei jedoch das Getriebe mit Füßen und einer herkömmlichen Abtriebswelle versehen ist, wobei die Lager zwischen dem Planetenradträger und dem Gehäuse größer sind, infolge der Beanspruchung, die von der Abtriebswelle herrührt, z. B. durch eine mangelnde Ausrichtung der Antriebswellenkupplung oder der Tangentialbeanspruchung eines Zahnrades, das drehfest auf der Abtriebswelle angeordnet ist,

Fig. 7 zur Information, die konstanten Reaktionen auf die Planetenradlager eines herkömmlichen Planetengetriebezuges, bei welchem das Übersetzungsverhältnis ein Bruchteil dessen ist, der erreicht werden kann mit einem Planetengetriebezug mit mehreren Exzentern,

Fig. 8 und 9 für Zahnradzähne mit einem Eingriffswinkel von 25° die Reaktionen auf die beiden Exzenterlager des gleichen Planetenrades, und zwar für die Position 0° oder 360° in Fig. 8 und die Position 90° in Fig. 9, wobei die Reaktionen, für welche die Beanspruchung in der gemeinsamen Ebene der beiden Exzenterlagerachsen liegen, nur auf den Exzenter wirken, der auf der linken Seite der Fig. 8 und 9 liegt, wobei es sich um den Exzenter handelt, der das Lager mit normalem inneren Radial-Spiel trägt, während der Exzenter auf der rechten Seite ein Lager mit erhöhtem inneren Radial-Spiel trägt, und

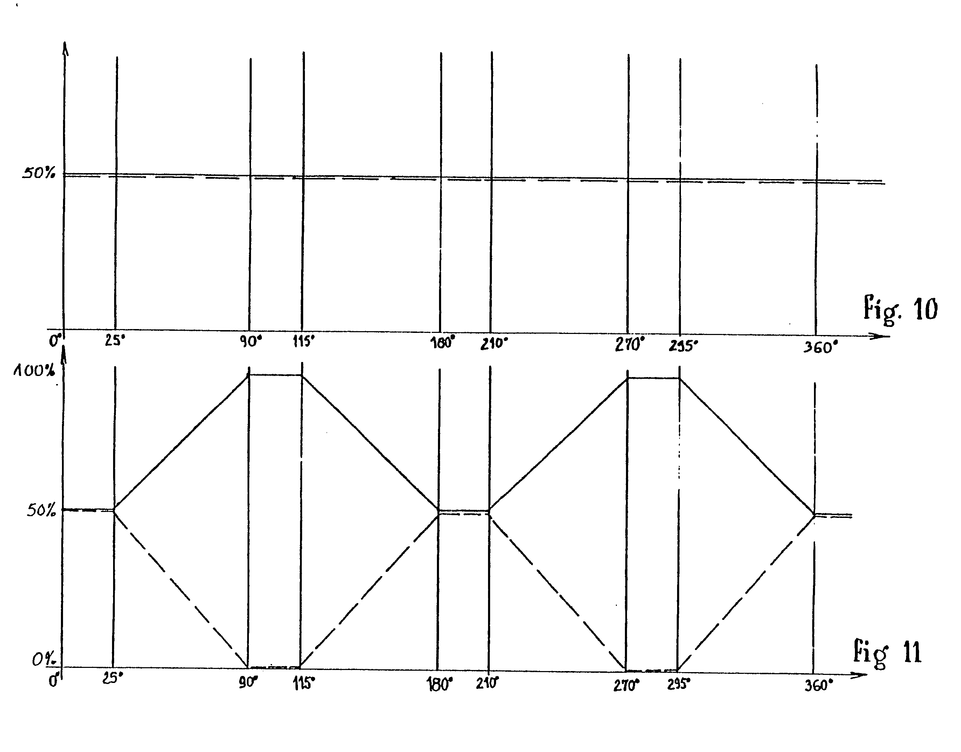

Fig. 10 und 11 für eine vollständige Umdrehung der Kurbelzapfen von der Position 0° bis zu 360° der Kurbelzapfen mit Doppelexzentern, die Gesamtsumme der für jeden Kurbelzapfen zu übertragenden Drehmomente, d. h. für jedes der zweiten äußeren Zahnräder, wobei die Fig. 10 für die erfindungsgemäße Anordnung steht, mit einem Lager mit normalem inneren Radial-Spiel und einem Lager mit erhöhtem inneren Radial-Spiel für jeden Kurbelzapfen und jedes Planetenrad, während die Fig. 11 für eine Anordnung mit zwei Lagern steht, mit einem geringeren inneren Radial-Spiel auf einem Lagerzapfen als auf dem anderen, aufgrund der Herstellungstoleranzen für die Lager, die Kurbelzapfen-Axiallöcher und den Planetenträger, wobei man eine Verteilung gemäß dieser Figur erhalten könnte, wenn vier Lager vorgesehen wären, mit normalem inneren Radial-Spiel für die beiden Kurbelzapfen.

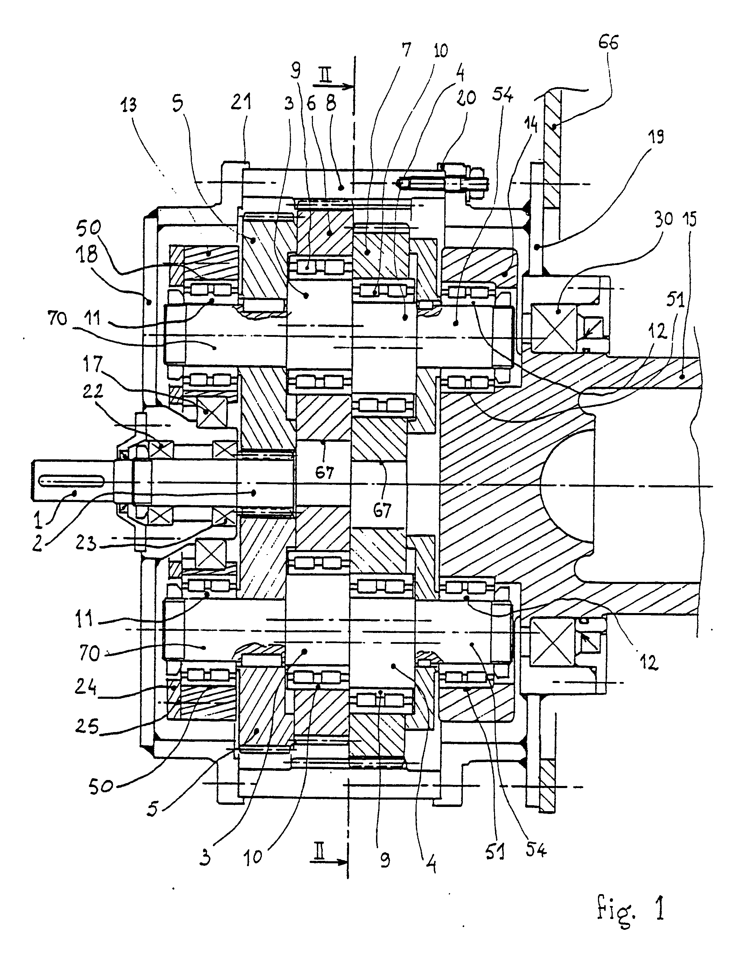

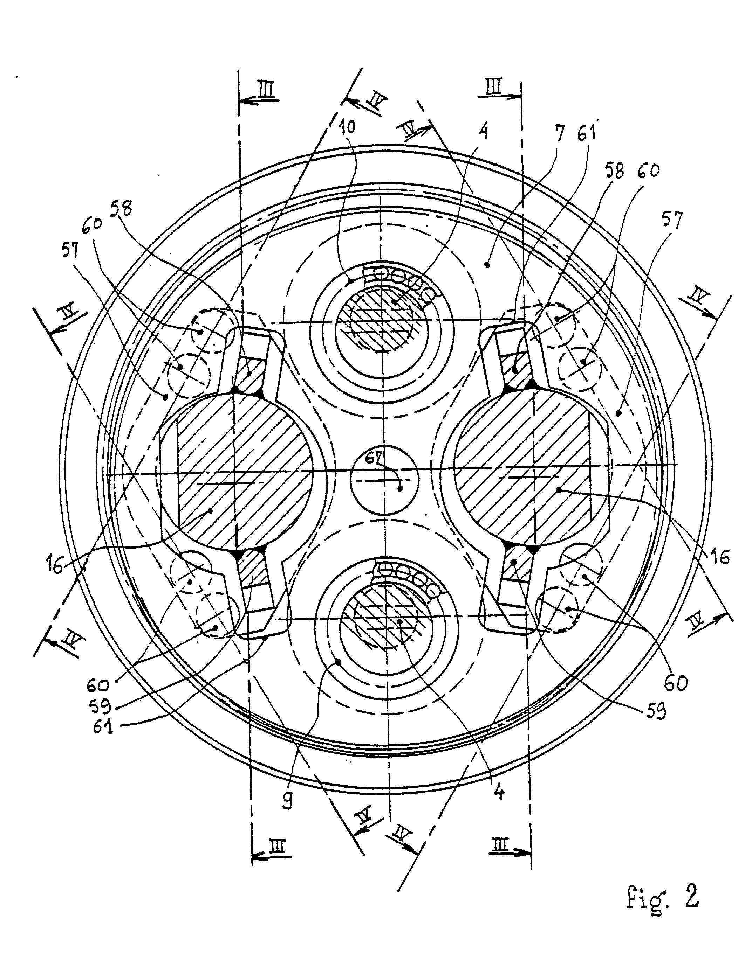

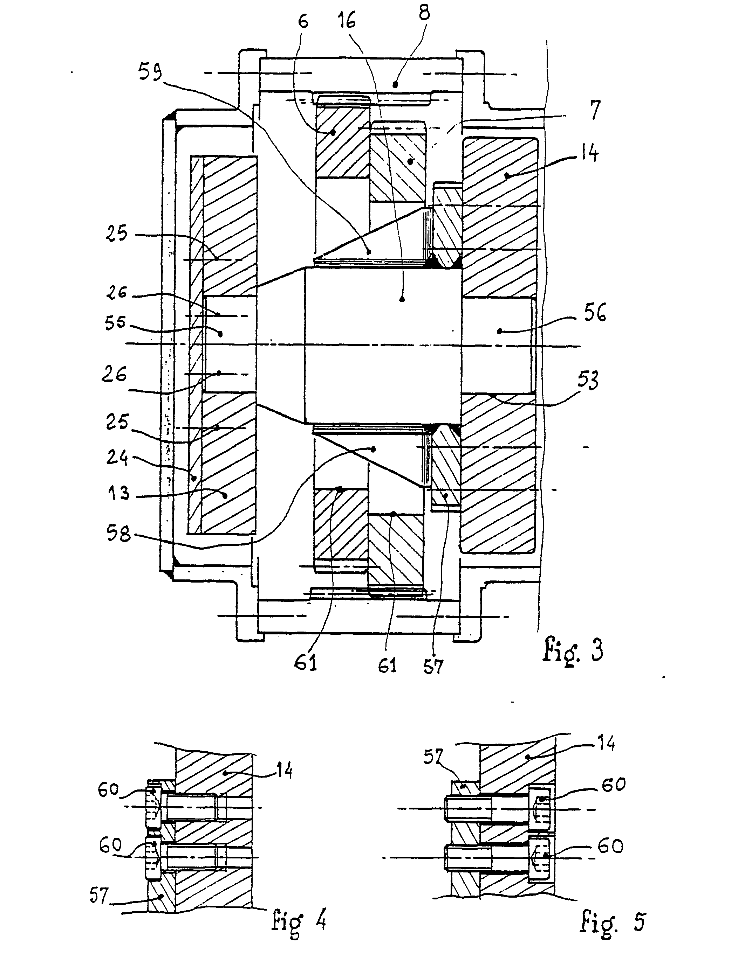

Die Fig. 1 zeigt als erste Ausführungsform der Erfindung ein Aufsteck-Planetengetriebe mit zwei Exzentern. Das Getriebe umfaßt eine Antriebswelle 1 mit einem außenverzahnten Ritzel 2, welches die beiden außenverzahnten Zahnräder 5 antreibt, die auf den Kurbelzapfen 70 drehfest sind. Jeder Kurbelzapfen trägt zwei Exzenter 3 und 4, die in einem Winkelabstand von 180° zueinander angeordnet sind. Die Drehung der Doppelexzenter 3 und 4 überträgt auf die Planetenräder 6, 7, die mit dem äußeren innenverzahnten Zahnring 8 kämmen, eine rotatorische Bewegung. Jeder Doppelexzenter 3, 4 trägt die Lager 9, 10, die sich jeweils in den Axiallöchern der Planetenräder 6 und 7 befinden. Die Lager 9 besitzen ein verkleinertes oder normales inneres Radial-Spiel und die Lager 10 besitzen analog dazu ein normales oder ein vergrößertes inneres Radial-Spiel, wie z. B. C4 (vergrößertes Spiel) der Normen der Lagerhersteller. Die Kurbelzapfen 70 sind jeweils in dem Planetenträger über Lager 11 und 12 drehbar gehalten. Wie sich aus der Betrachtung der Fig. 2 und 3 zusammen mit Fig. 1 ergibt, ist der Flansch 14 mit der Abtriebswelle 15 starr an dem Flansch 13 befestigt, mit Hilfe zweier Querriegel 16, die mit Rippen 58 und 59, einem Kragen 57 sowie Stirnzapfen 55 und 56, die jeweils in die Flansche 13 und 14 hineingepreßt werden, versehen sind. Der Flansch 13, der starr mit dem Flansch 14 verbunden ist, bildet den Planetenträger. Der Planetenträgerflansch 13 ist mit Hilfe des Lagers 17 in dem Antriebsflansch 18 des Getriebegehäuses drehbar gehalten. Die Abtriebswelle 15 ist über das Lager 30 in dem Abtriebsflansch 19 des Getriebegehäuses gelagert. Die Getriebegehäuseflansche 18 und 19 werden auf der Außenseite des Zahnringes 8 über Zentrierungen 20 und 21 zentriert. Die Flansche 18 und 19 sowie der Zahnring 8 bilden das Gehäuse des Planetengetriebes, wobei eine Drehmomentstütze 66 mit dem Flansch 19 verschraubt ist. Die Antriebswelle 1 des außenverzahnten Ritzels 2 ist in dem Antriebsflansch 18 über die Lager 22 und 23 gehalten. Der Ringflansch 24 ist mit dem Planetenradträgerflansch 13 sowie dem Stirnzapfen 55 des Querriegels 16 verschraubt.

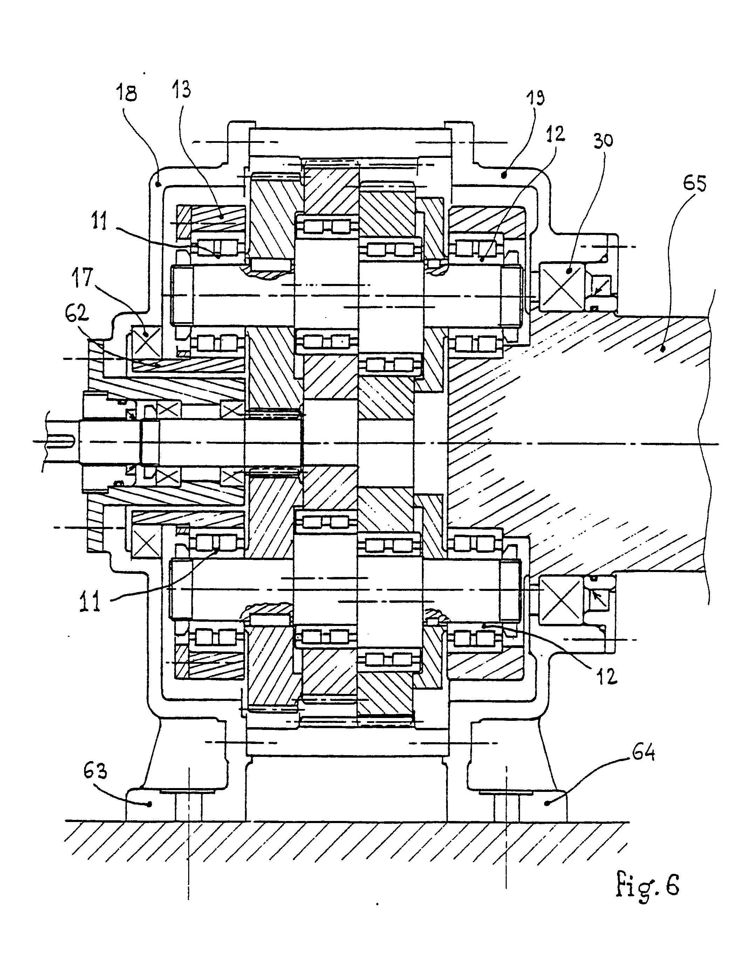

Wie sich aus den Fig. 4 und 5 ergibt, ist der Kragen 57 der Querriegel 16 mit dem Planetenradträgerflansch 14 über die Schrauben 60 verbunden, wobei diese in Fig. 4 von der Innenseite eingeschraubt sind und gemäß Fig. 5 von der Außenseite des Planetenradträgers. In Fig. 2 befinden sich der Kragen 57 und die Schrauben 60 hinter dem Planetenrad 7, dessen Öffnungen 61 groß genug sind, daß die Querriegel 16 mit den Rippen 58 und 59 hindurchpassen, und zwar mit einem hinreichend großen Spiel, das die rotatorische Bewegung der Planetenräder 6 und 7 gestattet. Bei der in Fig. 6 dargestellten Ausführungsform ist das Lager 17 größer als das Lager 17 nach Fig. 1. Einerseits ist der Außendurchmesser dieses Lagers 17 gemäß Fig. 6 nicht mehr begrenzt durch den Außendurchmesser des Lagers 11, wie dies gemäß Fig. 1 der Fall ist, während andererseits der Abstand zwischen den Lagern 17 und 30 nach Fig. 6 größer ist als nach Fig. 1. Dies ist interessant für die Lager eines am Boden über Füße 63, 64 befestigten Getriebes, entsprechend der Darstellung in Fig. 6. Dies liegt daran, daß das Lager 17 nicht nur die inneren Reaktionen abzustützen hat, sondern auch die Reaktionen von den Elementen, die von der Abtriebswelle 65 angetrieben sind, wobei es sich um ein Zahnrad handeln kann, eine Kupplung mit einer mangelhaften Ausrichtung, oder ein offenes Getrieberitzel. Bei einem Aufsteckgetriebe mit einer Drehmomentstütze, wie sie in Fig. 1 dargestellt ist, hat das Lager 17 nur innere Reaktionskräfte aufzunehmen.

In Fig. 6 ist das Lager 17 einerseits auf einem Rohr 62 zentriert, das Teil des Planetenradträgerflansches 13 ist und andererseits in dem Gehäuseflansch 18. Trotz des Rohres 62 können die Planetenradträgerflansche 13 und 14 miteinander verschraubt werden, zur gleichzeitigen maschinellen Herstellung der Bohrung für die Stirnzapfen 55 und 56 der Querriegel und der Bohrungen 50 und 51 für die Lager 11 und 12 zur Minimierung des Einflusses der Herstellungstoleranzen für die Gesamtanordnung. Die Bohrungen 67 in der Mitte der Planetenräder 6 und 7 sind vorgesehen zur Zentrierung der Planetenräder, wenn diese miteinander verschraubt sind, zur Herstellung der Axiallöcher für die Lager 9 und 10 und der Zahnkränze.

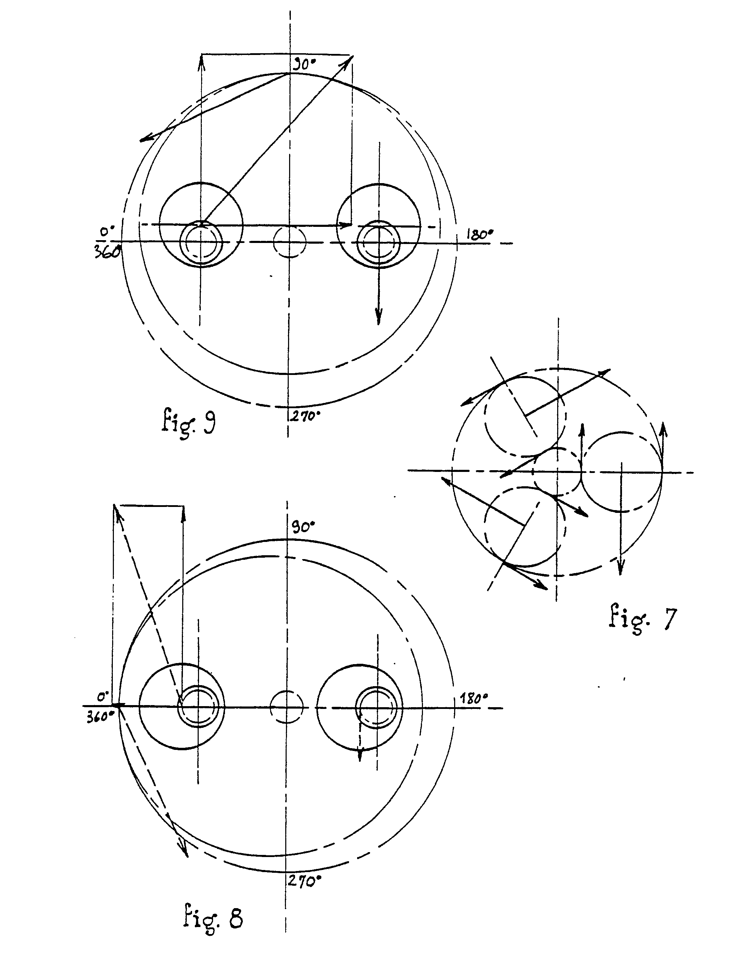

Die Fig. 7 zeigt in einer schematischen Darstellung die gleichmäßige Aufteilung der Reaktionskräfte in einem herkömmlichen Planetengetriebezug, für welche das Untersetzungsverhältnis nur ein Bruchteil des Untersetzungs-Verhältnisses eines Mehrfachexzenter-Planetengetriebezuges sein kann. Diese Fig. 7 dient zum Vergleich mit der Aufteilung der Reaktionskräfte in einem Planetengetriebezug mit Mehrfachexzentern, bei welchem sich die Aufteilung der Reaktionskräfte kontinuierlich ändert während einer vollständigen Umdrehung der Exzenter. Zum Zwecke der Erläuterung zeigen die Fig. 8 und 9 die Reaktionen auf die Exzenterlager für die Position 0° oder 360° in Fig. 8 und für die Position 90° in Fig. 9. In den Fig. 8 und 9 besitzt das Exzenterlager auf der linken Seite ein normales inneres Radial-Spiel und das Exzenterlager auf der rechten Seite ein erhöhtes inneres Radial-Spiel. Beanspruchungen, die in der Ebene liegen, die durch die Achsen der beiden Axiallochlager verläuft, wirken nur auf das Lager, das sich auf der linken Seite befindet, aufgrund der inneren radialen Spielunterschiede zwischen den beiden Lagern, die sich in einer starren Platte befinden, wobei das Planetenrad eine starre Platte darstellt. Es ist leicht, einzusehen, daß bei drei Axiallöchern anstatt nur zweien :

a) die Abstände zwischen den Axiallöchern kleiner sein würden, was bedeutet, daß größere Reaktionswerte auf jedes Lager einwirken, während einer jeden Rotation des Planetenrades und

b) die Möglichkeit nicht gegeben wäre, eine genaue Bestimmung der Belastungsteilung zwischen den drei Lagern in einer starren Platte durch die inneren radialen Spielunterschiede auszuführen.

Betrachtet man die Fig. 1 bei einer vollen Rotation von 0° bis 360° eines jeden Kurbelzapfens 70, wobei die Lager 9 ein normales inneres Radial-Spiel und die Lager 10 ein erhöhtes inneres Radial-Spiel, z. B. C4, besitzen, so ergibt die Gesamtsumme der Drehmomente aufgrund der Lagerreaktionen auf jeden Doppelexzenter 3 und 4 einen konstanten Wert, wie dies die Fig. 10 zeigt. Dies bedeutet, daß die Antriebskraft von dem ersten außenverzahnten Ritzel 2 gleichmäßig aufgeteilt wird zwischen den beiden zweiten außenverzahnten Zahnrädern 5. Wenn die beiden Lager 9 mit dem normalen inneren Radial-Spiel auf dem gleichen Doppelexzenter 3 und 4 und die beiden Lager 10 mit dem erhöhten inneren Radial-Spiel auf dem anderen Doppelexzenter 3, 4 angeordnet würden, so würde die Gesamtsumme der Drehmomente aufgrund der Lagerreaktionen auf jeden Doppelexzenter 3, 4 Werte ergeben, wie dies die Fig. 11 zeigt. Das bedeutet, daß zwischen 90° und 115° einerseits und 270° und 295° andererseits der Doppelexzenter 3, 4 mit den beiden Lagern 9, die ein normales inneres Radial-Spiel aufweisen, praktisch 100 % der Antriebskraft überträgt, während der andere Doppelexzenter 3, 4 mit den beiden Lagern 10, die ein erhöhtes inneres Radial-Spiel aufweisen, dann überhaupt keine Kraft überträgt. Aufgrund der Fertigungstoleranzen der einzelnen Teile könnte der Einsatz von vier Lagern mit normalem inneren Radial-Spiel für die Lager 9 und 10 zu einer Situation führen, wie sie in Fig. 11 dargestellt ist. Dies ist nachteilig, da es stets die gleichen Zähne des außenverzahnten Zahnrades 5 sind, die 100 % der Antriebskraft zu übertragen haben, so daß dieses außenverzahnte Zahnrad 5 für eine doppelte Belastung auszulegen ist, als bei einem außenverzahnten Zahnrad mit der Lageranordnung, gemäß der vorliegenden Erfindung, bei welcher ein Lager ein normales oder verkleinertes inneres Radial-Spiel besitzt und das andere ein analog dazu ein vergrößertes oder normales inneres Radial-Spiel für jeden Doppelexzenter 3, 4 und jedes Planetenrad 6, 7.

Mit der Drehmomentverteilung nach Fig. 10 auf der Vorstufe (Ritzel 2, Zahnräder 5) ist das Getriebe nicht selbsthemmend.

Mit der Drehmomentverteilung nach Fig. 11 auf derselben Vorstufe ist das Getriebe selbsthemmend zwischen 90° und 115° und zwischen 270° und 295°. Hierdurch ergibt sich eine vorteilhafte Möglichkeit der Montage-Kontrolle.

Die Lager 22, 23 des Eingangsritzels 2 werden vorzugsweise mit großem Radialspiel gewählt bzw. eingebaut. Dieses, um bekannterweise die Selbstzentrierung des Ritzels 2 zwischen den beiden Zahnrädern 5 zu erlauben. Diese Selbstzentrierung ist bei dieser Art von Doppelexzenter-Getrieben erfindungsgemäß nur möglich, weil die Leistungsverteilung zwischen den beiden Doppelexzentern 70 gemäß Fig. 10 gewährleistet ist.

**Patentansprüche**

1. Planetengetriebe mit zwei Doppelexzentern (3, 4) und einem ersten außenverzahnten Ritzel (2), das mit einer Antriebswelle (1) drehfest ist, zwei außenverzahnten Zahnrädern (5), die mit dem außenverzahnten Ritzel (2) kämmen ; zwei diametral gegenüberliegende Kurbelzapfen (70), die jeweils einen Doppelexzenter (3, 4) tragen und die mit den außenverzahnten Zahnrädern (5) drehfest sind, zur Übertragung der Rotation der außenverzahnten Zahnräder (5) auf die Doppelexzenter (3, 4) ; zwei als Planetenräder (6, 7) bezeichnete Zahnräder, die je zwei im Umfangsabstand voneinander angeordnete Axiallöcher zur Aufnahme je eines Lagers (9, 10) tragen, wobei die Planetenräder (6, 7) eine Außenverzahnung aufweisen und wobei eine aufeinander abgestimmte exzentrische Drehbewegung der beiden Doppelexzenter (3, 4), dessen beiden Exzenter (3, 4) in einem Exzentrizitätswinkel von 180° zueinander stehen, die rotatorische Bewegung der Planetenräder (6, 7) erzeugt ; sowie einen äußeren innenverzahnten Zahnring (8), der mit der Außenverzahnung der Planetenräder (6, 7) kämmt, wobei der äußere innenverzahnte Zahnring (8) den äußeren Teil des Getriebegehäuses als stationäres oder sich langsam drehendes Element bildet, und die Kurbelzapfen (70) in einem Planetenradträger (13, 14) gelagert sind, der ein sich langsam drehendes oder stationäres Element bildet, und wobei jeder Exzenter (3, 4) mittels eines Lagers (9, 10) gelagert ist, das in einem Axialloch des zugeordneten Planetenrades (6, 7) sitzt, dadurch gekennzeichnet, daß jeder Doppelexzenter ein Lager (9) mit einem normalen inneren Radial-Spiel auf dem einen Exzenter und ein Lager (10) mit einem erhöhten inneren Radial-Spiel auf dem anderen Exzenter trägt, und wobei eines der beiden Axiallöcher eines jeden Planetenrades (6, 7) ein Lager (9) mit einem normalen inneren Radial-Spiel aufnimmt, während das andere Axialloch jeweils desselben Planetenrades (6, 7) ein Lager (10) mit einem erhöhten inneren Radial-Spiel aufnimmt.

2. Planetengetriebe nach Anspruch 1, dadurch gekennzeichnet, daß jeweils anstelle jedes Lagers (9) mit normalem inneren Radial-Spiel ein Lager mit verkleinertem inneren Radial-Spiel und jeweils anstelle jedes Lagers (10) mit erhöhtem inneren Radial-Spiel ein Lager mit normalem inneren Radial-Spiel vorgesehen ist.

3. Planetengetriebe nach Anspruch 1 oder 2, dadurch gekennzeichnet, daß der Planetenradträger zwei Flansche (13, 14) trägt, die über zwei Querriegel (16) starr miteinander in Verbindung stehen, und jeder der Querriegel (16) mit mindestens zwei Rippen (58, 59) und einem Kragen (57) versehen ist, der am Planetenträgerflansch (14) angeschraubt ist, welcher die Abtriebswelle (15, 65) umfaßt.

4. Planetengetriebe nach einem der Ansprüche 1 bis 3, dadurch gekennzeichnet, daß die beiden Planetenräder (6, 7) zur Herstellung der Axiallöcher für die Aufnahme der Lager (9, 10) und der Außenverzahnung zur gleichen Zeit miteinander verschraubt sind.

5. Planetengetriebe nach einem der Ansprüche 1 bis 4, dadurch gekennzeichnet, daß die beiden außenverzahnten Zahnräder (5) auf einen gemeinsamen Dorn drehfest sind, zur gleichzeitigen Herstellung ihrer Außenverzahnung.

6. Planetengetriebe nach einem der Ansprüche 1 bis 5, dadurch gekennzeichnet, daß die beiden Flansche (13, 14) der Planetenradträger miteinander verschraubt sind, zur gleichzeitigen Herstellung der Lagerbohrungen (50, 51) für die Kurbelzapfen (70) und der Bohrungen in den Flanschen für die Stirnzapfen (55, 56) der Querriegel (16).

7. Planetengetriebe nach einem der Ansprüche 1 bis 6, dadurch gekennzeichnet, daß die beiden Doppelexzenterwellen (70) aus einer Welle in einem Stück bearbeitet werden und nach der Bearbeitung voneinander getrennt werden.

**Claims**

1. Epicyclic gear mechanism with two double eccentrics (3, 4) and : a first external pinion (2) connected in a torque-proof manner with a drive shaft (1), two external gears (5) meshing with the external pinion (2) ; two diametrally opposite crank pins (70) each of which carries a double-eccentric (3, 4) and which are connected in torqueproof manner with external gears (5) for transmitting the rotation of the external gears (5) to double eccentrics (3, 4) ; two gears referred to as planet gears (6, 7) each of which is provided with two axial holes arranged at a peripheral distance from one another for accommodating each one bearing (9, 10), whereby the planet gears (6, 7) have external teeth and whereby an eccentric rotary motion of the two double eccentrics (3, 4), the two eccentrics of which (3, 4) are located at an eccentric angle of 180° in respect of one another, give rise to the rotational motion of the planet gears (6, 7) ; as well as an outer annulus (8) with teeth on the inside, which meshes with the external teeth of the planet gears (6, 7), whereby the outer annulus (8) with teeth on the inside constitute the outer part of the gear mechanism casing by way of a stationary or slowly rotating unit and the crank pins (70) are located in a planet gear carrier (13, 14) constituting a slowly rotating or stationary unit, and whereby every eccentric (3, 4) is located by means of a bearing (9, 10), which is situated within an axial hole of the corresponding planet gear (6, 7), characterised in that every double eccentric carries a bearing (9) subject to normal internal radial play on one eccentric and a bearing (10) subject to increased internal radial play on the other eccentric, and whereby one of the two axial holes of each planet gear (6, 7) accommodates a bearing (9) subject to normal internal radial play, whereas the other axial hole of, in every case, the same planet gear (6, 7) accommodates a bearing (10) subject to increased internal radial play.

2. Epicyclic gear mechanism according to claim 1, characterised in that a bearing subject to reduced internal radial play is, in every case, provided instead of every bearing (9) subject to normal internal radial play and in that a bearing subject to normal internal radial play is in every case provided instead of every bearing (10) subject to increased internal radial play.

3. Epicyclic gear mechanism according to claim 1 or 2, characterised in that the planet gear carrier bears two flanges (13, 14) rigidly connected with one another by means of two cross-bolts (16), each cross-bolt (16) being provided with at least two ribs (58, 59) and a collar (57) screwed to epicyclic carrier flange (14) which comprises output shaft (15, 65).

4. Epicyclic gear mechanism according to one of claims 1 to 3, characterised in that the two planet gears (6, 7) are screwed together with a view to producing the axial holes for accommodating the bearings (9, 10) and the outer teeth simultaneously.

5. Epicyclic gear mechanism according to one of claims 1 to 4, characterised in that the two external gears (5) are mounted in a torsion-proof manner on a common shaft, with a view to simultaneous production of their external teeth.

6. Epicyclic gear mechanism according to one of claims 1 to 5, characterised in that the two flanges (13, 14) of the planet gear carriers are screwed together, with a view to simultaneous production of the bearing bores (50, 51) for crank pins (70) and the bores in the flanges for the end pins (55, 56) of cross-bolts (16).

7. Epicyclic gear mechanism according to one of claims 1 to 6, characterised in that the two double eccentric shafts (70) are machined from a single shaft in one piece and separated from one another after machining.

## Revendications

1. Réducteur planétaire avec deux excentriques doubles (3, 4) et : un premier pignon à denture extérieure (2) solidaire d'un arbre d'entrée (1) ; deux roues dentées à denture extérieure (5) qui engrènent avec le pignon (2) ; deux vilebrequins (70) diamétralement opposés comportant chacun un excentrique double (3, 4) et qui sont solidaires des roues dentées (5) pour transmettre la rotation des roues dentées (5) aux excentriques double (3, 4) ; deux roues dentées (6, 7) dénommées planétaires, comportant chacune deux alésages axiaux équidistants destinés à recevoir chacun un roulement (9, 10), les planétaires (6, 7) ayant une denture extérieure, une rotation synchronisée des deux excentriques doubles (3, 4), dont les deux excentriques (3, 4) sont décalés de 180°, provoquant un mouvement circulaire des planétaires (6, 7) ; une couronne à denture intérieure (8) qui engrène avec les planétaires (6, 7), la couronne à denture inférieure (8) formant la partie extérieure du carter qui est soit la partie fixe, soit la partie basse vitesse, les vilebrequins (70) tourillonnant dans un porte-satellite (13, 14) qui forme soit la partie basse vitesse, soit la partie fixe, chacun des excentriques (3, 4) tourillonnant à l'aide de roulements (9, 10) dans les alésages axiaux du planétaire correspondant (6, 7), caractérisé en ce que chaque excentrique double reçoit un roulement (9) avec jeu interne radial normal sur l'un des excentriques et un roulement (10) avec un jeu interne radial augmenté sur l'autre excentrique et que l'un des alésages axiaux de chaque planétaire (6, 7) reçoit un roulement (9) avec jeu interne radial normal, l'autre alésage de chaque planétaire (6, 7) recevant un roulement (10) avec jeu interne radial augmenté.

2. Réducteur planétaire selon revendication 1, caractérisé en ce que à la place de chaque roulement (9) avec jeu interne radial normal, un roulement avec jeu interne radial réduit est monté et à la place de chaque roulement (10) avec jeu interne radial augmenté, un roulement avec jeu interne radial normal est monté.

3. Réducteur planétaire selon revendication 1 ou 2, caractérisé en ce que le porte-satellite comporte deux flasques (13, 14) réunis rigidement par deux entretoises (16) et que chaque entretoise (16) a au moins deux nervures (58, 59) et un flasque (57) qui est vissé sur le flasque (14) du porte-satellite qui comporte l'arbre de sortie (15, 65).

4. Réducteur planétaire selon l'une des revendications 1 à 3, caractérisé en ce que les deux planétaires (6, 7) sont vissés ensemble pour l'usinage simultané des alésages axiaux pour les roulements (9, 10) et le taillage simultané des dentures.

5. Réducteur planétaire selon l'une des revendications 1 à 4, caractérisé en ce que les deux roues à denture extérieure (5) sont repérées et fixées en rotation sur un même mandrin pour le taillage simultané des dentures extérieures.

6. Réducteur planétaire selon l'une des revendications 1 à 5, caractérisé en ce que les deux flasques (13, 14) du porte-satellite sont vissés ensemble pour l'usinage simultané des alésages pour les roulements (50, 51) des vilebrequins (70) ainsi que des alésages pour les arbres de centrage (55, 56) des entretoises (16).

7. Réducteur planétaire selon l'une des revendications 1 à 6, caractérisé en ce que les deux vilebrequins (70) sont exécutés en une seule pièce puis séparés en deux après usinage.

fig. 1

fig. 2

EP 0 180 748 B1

Fig. 3

Fig. 4

Fig. 5

3

Fig. 6

fig. 9

fig. 7

fig. 8

Fig. 10

Fig 11

EP 0 180 748 B1